(19) Europäisches Patentamt

European Patent Office

Office européen des brevets

(11) **EP 0 984 305 B1**

(12) **EUROPEAN PATENT SPECIFICATION**

(45) Date of publication and mention
of the grant of the patent:
**15.11.2006 Bulletin 2006/46**

(51) Int Cl.:
***G02B 6/02*** *(2006.01)*   ***G02B 6/036*** *(2006.01)*

(21) Application number: **99306112.6**

(22) Date of filing: **02.08.1999**

(54) **Long haul single mode waveguide fiber**

Monomode-Lichtleitfaser für Fernübertragung

Fibre optique monomode à longue distance

(84) Designated Contracting States:
**AT BE CH CY DE DK ES FI FR GB GR IE IT LI LU
MC NL PT SE**

(30) Priority: **30.08.1998 US 106332 P**

(43) Date of publication of application:
**08.03.2000 Bulletin 2000/10**

(73) Proprietor: **Corning Incorporated
Corning, New York 14831 (US)**

(72) Inventors:
• **Li, Ming-Jun
   Horseheads,NY 14845 (US)**
• **Stone, Jeffery Scott
   Addison,NY 14801 (US)**

(74) Representative: **Boon, Graham Anthony et al
Elkington and Fife LLP,
Prospect House,
8 Pembroke Road
Sevenoaks,
Kent TN13 1XR (GB)**

(56) References cited:
**EP-A- 0 724 171      EP-A- 0 789 255
EP-A- 0 902 307**

**Description**

**Background of the Invention**

The invention is directed to a single mode optical waveguide fiber designed for long repeater spacing, high data rate telecommunication systems. In particular, the single mode waveguide combines excellent bend resistance, low attenuation, and large effective area, $A_{eff}$, features that are desired for undersea applications.

A waveguide having large effective area reduces non-linear optical effects, including self phase modulation, four wave mixing, cross phase modulation, and non-linear scattering processes, all of which can cause degradation of signals in high power systems. In general, a mathematical description of these non-linear effects includes the ratio, $P/A_{eff}$, where P is optical power. For example, a non-linear optical effect can be described by an equation containing a term, $\exp[P \times L_{eff}/A_{eff}]$, where $L_{eff}$ is effective length. Thus, an increase in $A_{eff}$ produces a decrease in the non-linear contribution to the degradation of a light signal.

The requirement in the telecommunication industry for greater information capacity over long distances, without electronic signal regeneration, has led to a reevaluation of single mode fiber index profile design. The genera of these profile designs, which are called segmented core designs in this application, are disclosed in detail in U. S. patent 4,715,679, Bhagavatula.

The focus of this reevaluation has been to provide optical waveguides which:

- reduce non-linear effects such as those noted above;
- are optimized for the lower attenuation operating wavelength range around 1550 nm;
- are compatible with optical amplifiers; and,
- retain the desirable properties of optical waveguides such as high strength, fatigue resistance, and bend resistance.

The definition of high power and long distance is meaningful only in the context of a particular telecommunication system wherein a bit rate, a bit error rate, a multiplexing scheme, and perhaps optical amplifiers are specified. There are additional factors, known to those skilled in the art, which have impact upon the meaning of high power and long distance. However, for most purposes, high power is an optical power greater than about 10 mw. In some applications, signal power levels of 1 mW or less are still sensitive to non-linear effects, so that $A_{eff}$ is still an important consideration in such lower power systems.

A long distance is one in which the distance between electronic regenerators can be in excess of 100 km. The regenerators are to be distinguished from repeaters which make use of optical amplifiers. Repeater spacing, especially in high data density systems, can be less than half the regenerator spacing.

To provide a suitable waveguide for multiplexed transmission, the total dispersion should be low, but not zero, and have a low slope over the window of operating wavelength. In systems in which the suppression of potential soliton formation is important, the total dispersion of the waveguide fiber should be negative, so that the linear dispersion cannot counteract the non-linear self phase modulation which occurs for high power signals.

A typical application for such a waveguide fiber is undersea systems that, in order to be economically feasible, must carry high information rates over long distances without regenerators and over an extended window of wavelengths. The present invention describes a novel profile that is singularly suited to for use in these stringent conditions. The desired properties of the waveguide fiber for such a system are set forth in detail below.

By way of prior art, reference is made to EP-A-0724171 which describes, with reference to Figure 3a thereof, a single mode optical waveguide fiber comprising a segmented core having two segments and a cladding surrounding and in contact with the core. The radii, refractive index differences and refractive index profiles of the core segments are selected to provide a zero dispersion wavelength of about 1562 nm, a dispersion slope of about 0.12 ps/nm$^2$-km, an effective area of about 86 $\mu$m$^2$, and a cut-off wavelength of about 1600 nm as measured before cabling.

Attention is also drawn to EP-A-0789255.

**Definitions**

The following definitions are in accord with common usage in the art.

- The radii of the segments of the core are defined in terms of the index of refraction. A particular segment has a first and a last refractive index point. The radius from the waveguide centerline to the location of this first refractive index point is the inner radius of the core region or segment. Likewise, the radius from the waveguide centerline to the location of the last refractive index point is the outer radius of the core segment.

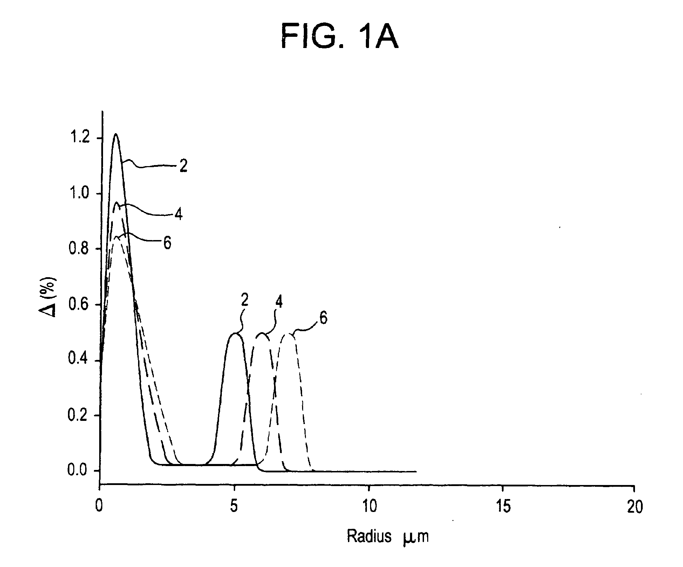

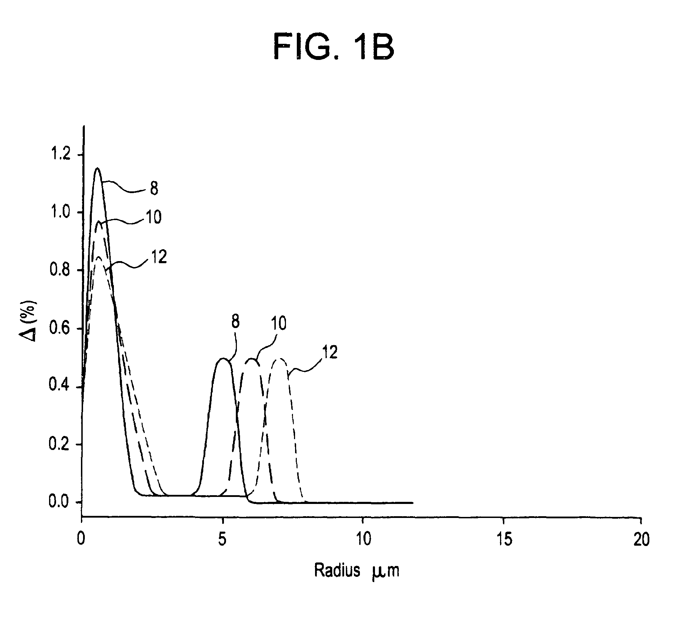

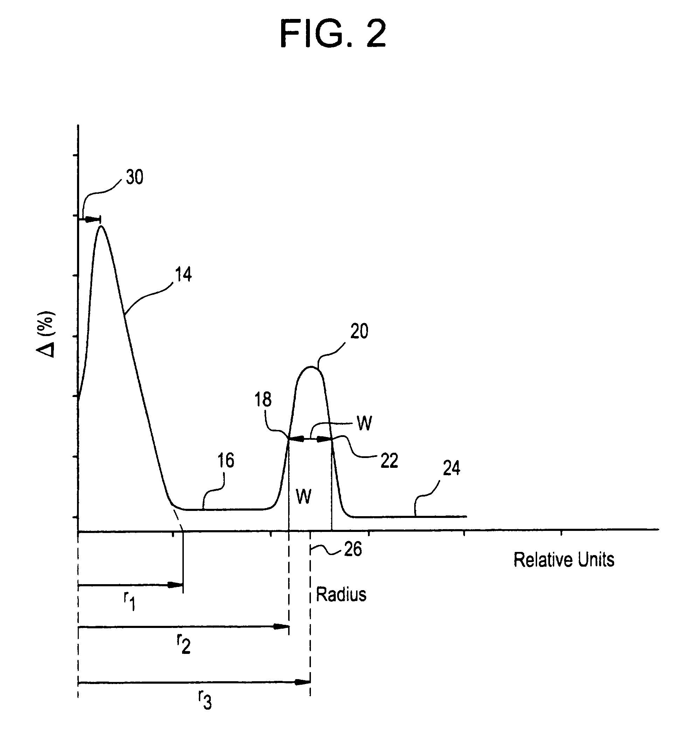

The segment radius may be conveniently defined in a number of ways, as will be seen in the description of Figs. 1 & 2 below. In the case of Fig. 2, from which Table 1 is derived, the radii of the index profile segments are defined as follows, where the reference is to a chart $\Delta$ % vs. waveguide radius:

* the radius of the central core segment, $r_1$, is measured from the axial centerline of the waveguide to the intersection of the extrapolated central index profile with the x axis, i.e., $\Delta$ % = 0 point;
* the outer radius, $r_2$, of the first annular segment is measured from the axial centerline of the waveguide to the intersection of the first annular segment profile with a vertical line drawn through $\Delta$ % point which is half of the $\Delta$ % difference between the first and the second annular segment profile;

* the outer radius, $r_3$, of the second annular segment is measured from the axial centerline of the waveguide to the intersection of the second annular segment profile with a vertical line drawn through $\Delta$ % point which is half of the $\Delta$ % difference between the second and third annular segment profile;

* the outer radius of any additional annular segments is measured analogously to the outer radii of the first and second annular segments; and,

* the radius of the final annular segment is measured from the waveguide centerline to the midpoint of the segment.

The width, w, of a segment is taken to be the distance between the inner and outer radius of the segment. It is understood that the outer radius of a segment corresponds to the inner radius of the next segment.

No particular significance is attached to a particular definition of index profile geometry. Of course, in carrying out a model calculation the definitions must be used consistently as is done herein.

- The effective area is

$$A_{eff} = 2\pi \, (\int E^2 \, r \, dr)^2 / (\int E^4 \, r \, dr),$$

where the integration limits are 0 to $\infty$, and E is the electric field associated with the propagated light. The effective area is wavelength dependent. The wavelength at which the effective area is calculated is the wavelength at or near the center of the operating window for which the waveguide fiber is designed. More than one $A_{eff}$ may be assigned to a waveguide fiber which operates over a range of the order of hundreds of nanometers.

- Effective diameter, $D_{eff}$, may be defined as,

$$A_{eff} = \pi (D_{eff}/2)^2 .$$

- The relative index, $\Delta\%$, is defined by the equation,

$$\Delta\% = 100 \times (n_1{}^2 - n_2{}^2)/2n_1{}^2,$$

where $n_1$ is the maximum refractive index of the index profile segment 1, and $n_2$ is a reference refractive index which is taken to be, in this application, the refractive index of the clad layer.

- The term refractive index profile or simply index profile is the relation between $\Delta$ % or refractive index and radius over a selected portion of the core.

- The term $\alpha$-profile refers to a refractive index profile expressed in terms of $\Delta$ (b) %, where b is radius, which follows the equation,

$$\Delta(b)\% = \Delta(b_o)(1 - [|b-b_o|/(b_1-b_o)]^\alpha),$$

where $b_o$ is the radial point at which the index is a maximum and $b_1$ is the point at which $\Delta(b)\%$ is zero and b is in the range $b_i \le b \le b_f$ , where delta is defined above, $b_i$ is the initial point of the $\alpha$-profile, $b_f$ is the final point of the $\alpha$-profile, and $\alpha$ is an exponent which is a real number.

Other index profiles include a step index, a trapezoidal index and a rounded step index, in which the rounding is typically due to dopant diffusion in regions of rapid refractive index change.

- Total dispersion is defined as the algebraic sum of waveguide dispersion and material dispersion. Total dispersion is sometimes called chromatic dispersion in the art. The units of total dispersion are ps/nm-km.
- The bend resistance of a waveguide fiber is expressed as induced attenuation under prescribed test conditions. Standard test conditions include 100 turns of waveguide fiber around a 75 mm diameter mandrel and 1 turn of waveguide fiber around a 32 mm diameter mandrel. In each test condition the bend induced attenuation, usually in units of dB/(unit length), is measured. In the present application, the bend test used is 5 turns of the waveguide fiber around a 20 mm diameter mandrel, a more demanding test which is required for the more severe operating environment of the present waveguide fiber.

## Summary of the Invention

The novel single mode waveguide fiber of this application meets the high performance telecommunication system requirements set forth herein.

The invention provides a single mode optical waveguide fiber comprising:

a segmented core comprising a first segment beginning at about the centerline of the core and having an $\alpha$-profile with an $\alpha$ profile of about 1, a second segment adjoining the first segment and having a step index profile, and a third segment adjoining the second segment having a rounded step index profile, each of the segments having a radius $r_i$, a refractive index profile and a relative refractive index percent, $\Delta_i$ %, where i is equal to the number of segments, wherein the first segment has a $\Delta_1$ % in the range of about 0.75 to 1.25, a radius $r_1$ in the range of about 1.5 to 4.0 $\mu$m, the second segment has a $\Delta_2$ % in the range of about 0.00 to 0.15 %, and the third segment has a $\Delta_3$ % in the range of about 0.2 to 0.7, a mid point radius $r_3$ in the range of about 4 to 8 $\mu$m, and a width in the range of about 0.5 to 3 $\mu$m; and a clad layer surrounding and in contact with the core, the clad layer having a refractive index $n_c$;

wherein, the $r_i$, $\Delta_i$ %, and the refractive index profiles are selected to provide:

attenuation at 1550 nm no greater than 0.25 dB/km, preferably less than 0.22 dB/km;
zero dispersion wavelength in the range of about 1565 nm to 1600 nm;
total dispersion at 1560 nm in the range of about -3.5 to -0.5 ps/nm-km, preferably about -2 ps/nm-km;
effective area > 60 $\mu$m$^2$ at 1550 nm; and,
cut off wavelength of fiber in cabled form in the range of about 1285 nm to 1500 nm.

Unless special steps are inserted in the process, the refractive index profiles of the segments will be rounded at points where the refractive index changes sharply. The rounding is due to diffusion of the dopant materials used to change the base glass refractive index. Thus any of these index profiles may be rounded at particular points. For example, a step index profile, having a positive $\Delta$% will typically have rounded upper and lower corners.

In one embodiment of the invention, the core segments all have a positive $\Delta$ %.

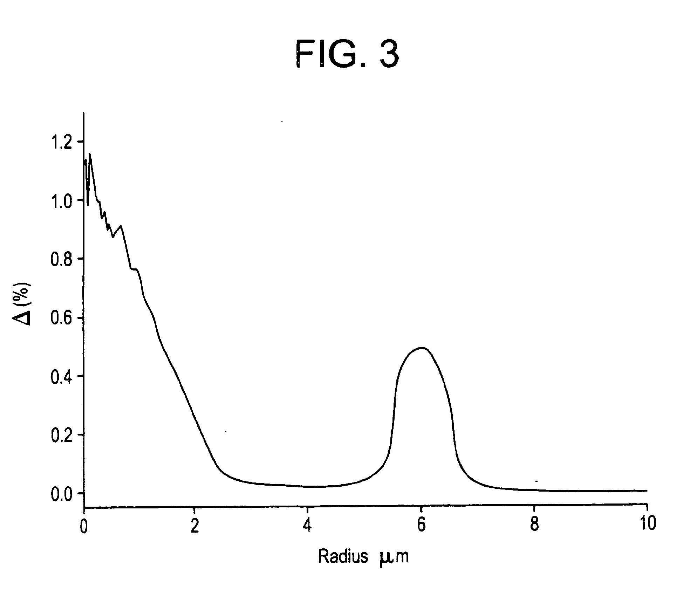

In another embodiment of the invention, the center of the core region has been compensated for dopant diffusion so that the refractive index on or near the waveguide fiber centerline is not reduced relative to the remainder of the center profile. An example of such centerline compensation is shown in Fig. 3 where the dopant is germanium. The diffusion compensated embodiment shows an average improvement in polarization mode dispersion of about a factor of 5 relative to a comparable uncompensated waveguide fiber profile. The polarization mode dispersion of the novel waveguide fiber is less than 0.08 ps/(km)$^{1/2}$ and typically less than about 0.04 ps/(km)$^{1/2}$.

A preferred range for the values of $\Delta$ and r is:

- $\Delta_1$ % in the range of about 0.85 to 1.20;
- $r_1$ in the range of about 2.0 to 3.5 $\mu$m;
- $\Delta_2$ % in the range of about 0.00 to 0.08 %;
- $\Delta_3$ % in the range of about 0.3 to 0.7;
- mid point radius $r_3$ in the range of about 5 to 7.5 $\mu$m; and,

width of the third segment in the range of about 0.8 to 2.0 $\mu$m.

A more preferred embodiment is:

- $\Delta_1$ % in the range of about 0.95 to 1.15;
- $r_1$ in the range of about 2.5 to 3.0 $\mu$m;
- $\Delta_2$ % in the range of about 0.00 to 0.04 %;
- $\Delta_3$ % in the range of about 0.3 to 0.7;
- mid point radius $r_3$ in the range of about 5 to 7.5 $\mu$m; and,
- width of the third segment in the range of about 0.8 to 1.5 $\mu$m.

In yet another embodiment, centerline diffusion is either uncompensated or partially compensated so that there is an indentation of refractive index on centerline having a minimum $\Delta$% of no more than about 0.20 of $\Delta_1$%. The indentation is typically of the shape of an inverted cone, i.e., the apex of the cone points downward, and the radius at the widest part of the cone is no greater than about 0.4 $\mu$m.

## Brief Description of the Drawings

Figs. 1a & b are charts of $\Delta$ % vs. radius each illustrating a modeled index profile similar to that of the invention.
Fig. 2 is a $\Delta$ % vs. radius chart showing the definitions of radius and width used in this application.
Fig. 3 is a chart of $\Delta$ % vs. radius showing an embodiment of the invention.

## Detailed Description of the Invention

The novel single mode optical waveguide is characterized by its segmented core design that provides the unusual combination of properties set forth above. These properties are achieved by selecting a proper refractive index profile shape of each of the segments and selecting the appropriate relative refractive index delta, $\Delta_i$ %, and radial extent, $r_i$, of the segments. The profile parameters are known to interact. For example, a center region $\alpha$-profile having an a of about 1, will have a radius different from a center region having a trapezoidal index to provide fibers having essentially identical properties.

The definitions of radius used herein are shown in Fig. 2. The radius of the central segment is shown by line $r_1$ drawn from the core centerline to the intersection of extrapolated line 14 with the horizontal axis. The outer radius of segment is line $r_2$ drawn from the centerline to the vertical line descending from the point 18 which marks the point where the relative index is half the difference between $\Delta_2$%, the relative index of segment 16, and $\Delta_3$%, the relative index of segment 20. The radius $r_3$ of the final annular segment 20 is draw to the center point 26 of that segment. The geometry is fully specified when the width w of the final segment is selected. This width is shown as line w that lies between points 18 and 22, the respective points of half index differences between segments 16 and 20, and segment 20 and clad 24. The radius of the centerline indentation is shown as line 30 drawn horizontally from the centerline at the widest point of the inverted cone indentation.

Three computer generated profiles, 2, 4, and 6, are shown in Fig. 1 a. The center segments and the associated outer annular segments have corresponding numbers for purposes of clarity. Each profile has an inverted cone indentation on centerline. Given the overall shape of the segmented core index profile, the properties of a waveguide fiber having that segmented core shape may be calculated. In the case of Fig. 1a, profile 4 provides the desired fiber characteristics. Fig. 1b shows three additional segmented core profiles, 8, 10, and 12. In this illustration, profile 10 yields the desired fiber properties.

The profile shown in Fig. 3 is a measured profile of a waveguide fiber having a refractive index profile in accord with the invention. Table 1 gives the core index profile parameters for this embodiment. The centerline diffusion is compensated in this design.

Table 1.

|  | Actual Profile |
|---|---|
| $\Delta_1$ % | 1.15 |
| $\Delta$ % on centerline | 0 |
| $\Delta_2$ % | 0.05 |
| $\Delta_3$ % | 0.5 |
| $r_1$ $\mu$m | 2.5 |
| $r_2$ $\mu$m | 5.5 |
| w $\mu$m (outermost annular segment) | 1 |

The average property values of a large number of waveguide fibers made using the parameters of Table 1 as target were:

- attenuation at 1550 nm - 0.204 dB/km;
- mode field diameter - 9.29 $\mu$m;
- effective area at 1550 nm- 70.9 $\mu$m$^2$;
- zero dispersion wavelength - 1576 nm;
- total dispersion at 1530 nm - (-5.565 ps/nm-km);
- total dispersion at 1560 nm - (-1.892 ps/nm-km);
- cut off wavelength - 1429.6 nm in cabled form; and,
- polarization mode dispersion - 0.037 ps/(km)$^{1/2}$.

Thus the manufacturing results provide a waveguide fiber suitable in every respect for use in severe environments such as undersea telecommunications cables. The manufacturing results also serve to validate the computer model.

Although particular embodiments of the invention have been herein disclosed and described, the invention is nonetheless limited only by the following claims.

**Claims**

1. A single mode optical waveguide fiber comprising:

   a segmented core comprising a first segment beginning at about the centerline of the core and having an $\alpha$-profile with an $\alpha$ value of about 1, a second segment adjoining the first segment and having a step index profile, and a third segment adjoining the second segment and having a rounded step index profile,each of the segments having a radius $r_i$ , a refractive index profile and a relative refractive index percent, $\Delta_i$ %, where i is equal to the number of segments, wherein the first segment has a $\Delta_1$ % in the range of about 0.75 to 1.25, a radius $r_1$ in the range of about 1.5 to 4.0 $\mu$m, the second segment has a $\Delta_2$ % in the range of about 0.00 to 0.15 %, and the third segment has a $\Delta_3$ % in the range of about 0.2 to 0.7, a mid point radius $r_3$ in the range of about 4 to 8 $\mu$m, and a width in the range of about 0.5 to 3 $\mu$m;
   and a clad layer surrounding and in contact with the core, the clad layer having a refractive index $n_c$;

   wherein, the $r_i$, $\Delta_i$ %, and the refractive index profiles are selected to provide:

   attenuation at 1550 nm no greater than 0.25 dB/km;
   zero dispersion wavelength in the range of about 1565 nm to 1600 nm;
   total dispersion at 1560 nm in the range of about -3.5 to -0.5 ps/nm-km; effective area > 60 $\mu$m$^2$ at 1550 nm; and,
   cut off wavelength of fiber in cabled form in the range of about 1285 nm to 1500 nm.

2. The single mode optical waveguide fiber of claim 1, wherein all of the $\Delta_i$ % are positive.

3. The single mode optical waveguide fiber of claim 1, in which the total dispersion at 1560 nm is about - 2 ps/nm-km.

4. The single mode optical waveguide fiber of claim 1, in which the polarization mode dispersion is no greater than about 0.08 ps/(km)$^{1/2}$.

5. The single mode optical waveguide fiber of any preceding claim, wherein the first segment has a $\Delta_1$ % in the range of about 0.85 to 1.20, a radius $r_1$ in the range of about 2.0 to 3.5 $\mu$m, the second segment has a $\Delta_2$ % in the range of about 0.00 to 0.08 %, and the third segment has a $\Delta_3$ % in the range of about 0.3 to 0.7, a mid point radius $r_3$ in the range of about 5 to 7.5 $\mu$m, and a width in the range of about 0.8 to

2.0 $\mu$m.

**6.** The single mode optical waveguide fiber of claim 5, wherein the first segment has a $\Delta_1$ % in the range of about 0.95 to 1.15, a radius $r_1$ in the range of about 2.5 to 3.0 $\mu$m, the second segment has a $\Delta_2$ % in the range of about 0.00 to 0.04 %, and the third segment has a $\Delta_3$ % in the range of about 0.3 to 0.7, a mid point radius $r_3$ in the range of about 5 to 7.5 $\mu$m, and a width in the range of about 0.8 to 1.5 $\mu$m.

**7.** The single mode optical waveguide fiber of any of claims 1 to 6, further including a relative index indentation on centerline, the indentation having the shape of an inverted cone being no more than about 0.20 $\Delta$ % less than $\Delta_1$ %, and the radius of the base of the inverted cone being no greater than about 0.4 $\mu$m.

**Patentansprüche**

**1.** Optische Monomode-Wellenleiterfaser, umfassend:

einen segmentierten Kern, der ein erstes Segment, das bei ungefähr der Mittenlinie des Kerns beginnt und ein $\alpha$-Profil mit einem $\alpha$-Wert von ungefähr 1 aufweist, ein zweites Segment, das an das erste Segment angrenzt und ein Stufenindexprofil aufweist, und ein drittes Segment umfasst, das an das zweite Segment angrenzt und ein gerundetes Stufenindexprofil aufweist, wobei jedes der Segmente einen Radius $r_i$, ein Brechungsindexprofil und einen relativen Brechungsindexprozentsatz $\Delta_i$ % aufweist, wobei i gleich der Anzahl von Segmenten ist, wobei das erste Segment einen $\Delta_1$% in dem Bereich von ungefähr 0,75 bis 1,25, einen Radius $r_1$ in dem Bereich von ungefähr 1,5 bis 4,0 $\mu$m aufweist, das zweite Segment einen $\Delta_2$ % in dem Bereich von 0,00 bis 0,15% und das dritte Segment einen $\Delta_3$ % in dem Bereich von ungefähr 0,2 bis 0,7 einen Mittelpunktradius $r_3$ in dem Bereich von ungefähr 4 bis 8 $\mu$m und eine Breite in dem Bereich von ungefähr 0,5 bis 3 $\mu$m aufweist; und eine Mantelschicht, die den Kern umgibt und in Kontakt mit diesem ist, wobei die Mantelschicht einen Brechungsindex $n_c$ aufweist;

wobei die $r_i$-, $\Delta_i$ %- und die Brechungsindexprofile gewählt sind, bereitzustellen:

eine Dämpfung bei 1550 nm von nicht größer als 0,25 dB/km; eine Nulldispersionswellenlänge in dem Bereich von ungefähr 1565 nm bis 1600 nm; eine Gesamtdispersion bei 1560 nm in dem Bereich von -3,5 bis -0,5 ps/nm-km;

eine effektive Fläche > 60 $\mu$m$^2$ bei 1550 nm; und eine Grenzwellenlänge der Faser in verkabelter Form in dem Bereich von ungefähr 1285 nm bis 1500 nm.

**2.** Optische Monomode-Wellenleiterfaser nach Anspruch 1, wobei sämtliche der $\Delta_i$ % positiv sind.

**3.** Optische Monomode-Wellenleiterfaser nach Anspruch 1, in welcher die Gesamtdispersion bei 1560 nm ungefähr -2 ps/nm-km ist.

**4.** Optische Monomode Wellenleiterfaser nach Anspruch 1, bei welcher die Polarisationsmodendispersion nicht größer als ungefähr 0,08 ps/(km)$^{1/2}$ ist.

**5.** Optische Monomode-Wellenleiterfaser nach einem voranstehenden Anspruch, wobei das erste Segment einen $\Delta_1$ % in dem Bereich von 0,85 bis 1,20, einen Radius $r_i$ in dem Bereich von ungefähr 2,0 bis 3,5 $\mu$m aufweist, das zweite Segment einen $\Delta_2$ % in dem Bereich von ungefähr 0,00 bis 0,08% aufweist und das dritte Segment einen $\Delta_3$ % in dem Bereich von 0,3 bis 0,7, einen Mittelpunktradius $r_3$ in dem Bereich von 5 bis 7,5 $\mu$m und eine Breite in dem Bereich von 0,8 bis 2,0 $\mu$m aufweist.

**6.** Optische Monomode-Wellenleiterfaser nach Anspruch 5, wobei das erste Segment einen $\Delta_1$% in dem Bereich von 0,95 bis 1,15, einen Radius $r_1$ in dem Bereich von 2,5 bis 3,0 $\mu$m aufweist, das zweite Segment einen $\Delta_2$ % in dem Bereich von ungefähr 0,00 bis 0,04% aufweist und das dritte Segment einen $\Delta_3$ % in dem Bereich von 0,3 bis 0,7, einen Mittelpunktradius $r_3$ in dem Bereich von ungefähr 5 bis 7,5 $\mu$m und eine Breite in dem Bereich von ungefähr 0,8 bis 1,5 $\mu$m aufweist.

**7.** Optische Monomode-Wellenleiterfaser nach einem der Ansprüche 1 bis 6, weiter einschließend eine relative Indexabsenkung in der Mittenlinie, wobei die Absenkung die Form eines invertierten Konus aufweist, die nicht mehr als 0,20 $\Delta$ % weniger als $\Delta_1$ % beträgt, und der Radius der Basis des invertierten Konus nicht größer als ungefähr 0,4 $\mu$m ist.

**Revendications**

**1.** Une fibre de guide d'ondes optique monomode comprenant :

un coeur segmenté comprenant un premier segment commençant au voisinage de la ligne centrale du coeur et ayant un profil en alpha où la valeur de alpha est voisine de l'unité, un deuxième segment se raccordant au premier segment et ayant un profil d'indice en gradin, et un troisième segment se raccordant au deuxième segment et ayant un profil d'indice en gradin arrondi, chacun des segments ayant un rayon $r_i$, un profil d'indice de réfraction et un pourcentage d'indice de réfraction relatif $\Delta_i$%, où i est égal au numéro des segments, le premier segment ayant un $\Delta_1$% se situant dans l'intervalle d'environ 0,75 à 1,25, un rayon $r_1$ se situant dans l'intervalle d'environ 1,5 à 4,0 $\mu$m, le deuxième segment ayant un $\Delta_2$% se situant dans l'intervalle d'environ 0,00 à 0,15 % et le troisième segment ayant un $\Delta_3$% se situant dans l'intervalle de 0,2 à 0,7, un rayon de point milieu $r_3$ se situant dans l'intervalle d'environ 4 à 8 $\mu$m et une largeur se situant dans l'intervalle d'environ 0,5 à 3 $\mu$m ;

et une couche de gainage entourant le coeur et se trouvant en contact avec lui, la couche de gainage ayant un indice de réfraction $n_c$ ;

dans laquelle les rayons $r_i$, les pourcentages d'indice $\Delta_i$% et les profils d'indice de réfraction sont choisis de façon à fournir :

- une atténuation à 1550 nm non supérieure à 0,25 dB/km ;
- une longueur d'onde de dispersion nulle se situant dans l'intervalle d'environ 1565 nm à 1600 nm ;
- une dispersion totale à 1560 nm se situant dans l'intervalle d'environ -3,5 à -0,5 ps/(nm.km) ;
- une section efficace supérieure à 60 $\mu$m$^2$ à 1550 nm ; et
- une longueur d'onde de coupure de la fibre sous forme câblée se situant dans l'intervalle d'environ 1285 nm à 1500 nm.

2. La fibre de guide d'ondes optique monomode de la revendication 1, dans laquelle tous les $\Delta_i$% sont positifs.

3. La fibre de guide d'ondes optique monomode de la revendication 1, dans laquelle la dispersion totale à 1560 nm est d'environ -2 ps/(nm.km).

4. La fibre de guide d'ondes optique monomode de la revendication 1, dans laquelle la dispersion modale de polarisation est non supérieure à environ 0,08 ps/(km)$^{½}$.

5. La fibre de guide d'ondes optique monomode de l'une quelconque des revendications précédentes, dans laquelle le premier segment a un $\Delta_1$% se situant dans l'intervalle d'environ 0,85 à 1,20, un rayon $r_1$ se situant dans l'intervalle d'environ 2,0 à 3,5$\mu$m, le deuxième segment a un $\Delta_2$% se situant dans l'intervalle d'environ 0,00 à 0,08 % et le troisième segment a un $\Delta_3$% se situant dans l'intervalle d'environ 0,3 à 0,7, un rayon de point milieu $r_3$ se situant dans l'intervalle d'environ 5 à 7,5 $\mu$m et une largeur se situant dans l'intervalle d'environ 0,8 à 2,0 $\mu$m.

6. La fibre de guide d'ondes optique monomode de la revendication 5, dans laquelle le premier segment a un $\Delta_1$% se situant dans l'intervalle d'environ 0,95 à 1,15, un rayon $r_1$ se situant dans l'intervalle d'environ 2,5 à 3,0 $\mu$m, le deuxième segment a un $\Delta_2$% se situant dans l'intervalle d'environ 0,00 à 0,04 %, et le troisième segment a un $\Delta_3$% se situant dans l'intervalle d'environ 0,3 à 0,7, un rayon de point milieu $r_3$ se situant dans l'intervalle d'environ 5 à 7,5 $\mu$m et une largeur se situant dans l'intervalle d'environ 0,8 à 1,5 $\mu$m.

7. La fibre de guide d'ondes optique monomode de l'une quelconque des revendications 1 à 6, comportant en outre un creux d'indice relatif sur la ligne centrale, le creux ayant la forme d'un cône renversé non inférieur de plus d'environ 0,20 $\Delta$% à $\Delta_1$%, et le rayon de la base du cône renversé étant non supérieur à environ 0,4 $\mu$m.

# FIG. 1A

# FIG. 1B

# FIG. 2

# FIG. 3